(19) Europäisches Patentamt / European Patent Office / Office européen des brevets

(11) **EP 4 302 114 B1**

(12) **FASCICULE DE BREVET EUROPEEN**

(45) Date de publication et mention de la délivrance du brevet:
**19.02.2025 Bulletin 2025/08**

(21) Numéro de dépôt: **22714117.3**

(22) Date de dépôt: **02.03.2022**

(51) Classification Internationale des Brevets (IPC):
**G01S 3/808** *(2006.01)*    **H04R 3/00** *(2006.01)*
**G01S 1/74** *(2006.01)*    **G01S 3/801** *(2006.01)*
**H04S 7/00** *(2006.01)*

(52) Classification Coopérative des Brevets (CPC):
**G01S 3/8083; H04R 3/005; G01S 1/753;**
G01S 3/801; H04R 2430/21; H04S 7/301

(86) Numéro de dépôt international:
**PCT/EP2022/055329**

(87) Numéro de publication internationale:
**WO 2022/184800 (09.09.2022 Gazette 2022/36)**

(54) **PROCEDE DE DETERMINATION D'UNE DIRECTION DE PROPAGATION D'UNE SOURCE SONORE PAR CREATION DE SIGNAUX SINUSOIDAUX A PARTIR DES SIGNAUX SONORES RECUS PAR DES MICROPHONES**

VERFAHREN ZUR BESTIMMUNG EINER AUSBREITUNGSRICHTUNG EINER SCHALLQUELLE DURCH ERZEUGUNG SINUSFÖRMIGER SIGNALE AUS VON MIKROFONEN EMPFANGENEN TONSIGNALEN

METHOD FOR DETERMINING A PROPAGATION DIRECTION OF A SOUND SOURCE BY CREATING SINUSOIDAL SIGNALS FROM SOUND SIGNALS RECEIVED BY MICROPHONES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.03.2021 FR 2102105**

(43) Date de publication de la demande:
**10.01.2024 Bulletin 2024/02**

(73) Titulaire: **IMMERSIVE AUDIO TECHNOLOGIES FRANCE**
**44800 Saint Herblain (FR)**

(72) Inventeurs:
• **THUMEREL, Olivier**
**44000 Nantes (FR)**
• **SIMON, Yohann**
**44640 Saint Jean de Boiseau (FR)**
• **HEEB, Thierry**
**1450 Sainte-Croix (CH)**

(74) Mandataire: **Benezeth, Philippe J.L.M.**
**Cabinet Innov'cean**
**9, rue de Fourcroy**
**44000 Nantes (FR)**

(56) Documents cités:
**FR-A1- 3 081 641    JP-A- 2008 154 130**

• KHMOU YOUSSEF ET AL: "Comparative Study between Several Direction of Arrival Estimation Methods", JOURNAL OF TELECOMMUNICATIONS AND INFORMATION TECHNOLOGY, 1 January 2014 (2014-01-01), pages 41 - 48, XP055870344, Retrieved from the Internet <URL:https://www.researchgate.net/profile/Miloud-Frikel/publication/274192556_Comparative_Study_between_Several_Direction_Of_Arrival_Estimation_Methods/links/5fcf3db7299bf188d4002680/Comparative-Study-between-Several-Direction-Of-Arrival-Estimation-Methods.pdf> [retrieved on 20211207]

**Description**

**1. DOMAINE DE L'INVENTION**

L'invention concerne la détermination de la direction d'une source sonore telle qu'une enceinte acoustique en utilisant un réseau de microphones. L'invention concerne plus particulièrement le fait que des temps d'arrivée relatifs sont calculés par des corrélations croisées sur les signaux sonores reçus et que la méthode de détermination utilise des signaux sinusoïdaux recréés.

**2. ARRIÈRE-PLAN TECHNOLOGIQUE**

L'invention s'applique notamment à la détermination de la direction d'arrivée dans l'espace de sources sonores. Il est connu des systèmes audios très performant comportant un nombre important de sources sonores, telles que des enceintes acoustiques. La présente invention ne concerne que le coté audio ce qui n'exclut en rien de l'utiliser dans des systèmes éventuellement complétés par un écran de grande dimension permettant la reproduction d'œuvres audiovisuelles, en d'autres termes des systèmes audiovisuels.

Pour améliorer l'écoute, de nombreux standards existent actuellement afin de créer une véritable ambiance sonore autour des auditeurs et utilisateurs du système audio. Ce son génère artificiellement une véritable immersion dans un environnement acoustique. Pour réaliser cela, le système audio comporte un grand nombre d'enceintes acoustiques générant des ondes sonores à partir de l'endroit où elles sont placées. La position des enceintes acoustiques dépend directement du standard de reproduction du son. Dans l'exemple d'un son 5.1 produit par une installation de home cinéma, les cinq enceintes sont réparties de la façon suivante :

- une au centre en face des auditeurs,
- deux devant, à droite et à gauche des auditeurs,
- deux en arrière, à droite et à gauche des auditeurs.

Cette répartition dans l'espace procure déjà une bonne restitution de l'environnement sonore, chaque source émettant un son spécifique. Ainsi, l'auditeur a l'impression que le son émis à l'arrière de l'image provient bien de cette direction.

Les systèmes audios se sont complexifiés au fil des années et les standards audios prennent maintenant en compte non seulement la direction sur le plan horizontal (appelé également l'azimut) mais aussi l'élévation de chaque source sonore. Lors d'une installation d'un système audio, il importe de bien positionner les sources sonores dans l'espace 3D autour de la zone où les auditeurs se situent. Pour cela, les constructeurs de système audio fournissent des indications en termes d'angle azimutal et d'angle d'élévation. Un installateur du système audio peut alors à partir d'un point donné, tracer des demi-droites ayant ces valeurs d'azimut et d'élévation par rapport à la position des auditeurs, et positionner les sources sonores sur le tracé de ces demi-droites.

L'installation d'une source sonore à un endroit donné préconisé par le constructeur n'est pas toujours possible tout simplement parce qu'à cet endroit il n'existe aucun support physique. De plus, lorsque l'installation s'effectue dans un local, les murs et les objets génèrent des perturbations ce qui nécessite un système robuste pour déterminer la position des enceintes acoustiques. Il importe donc de modéliser la propagation des sons dans un environnement et de considérer la position des enceintes comme inconnue de façon à pouvoir ensuite corriger cette position ou corriger le son émis par ces sources. La position des enceintes acoustiques devient plus critique lorsque l'audio est associé à un document visuel parce que le spectateur a une meilleure perception des directions. En effet, l'auditeur dispose alors de repères visuels qui permettent de mieux évaluer les endroits où les sources sonores devraient se situer dans un environnement 3D.

Il existe aujourd'hui des systèmes de détermination permettant de vérifier si chaque son produit par une source provient bien de la bonne direction. Ces systèmes mettent en œuvre à la fois du matériel sous la forme d'un réseau de microphones reliés à une centrale d'acquisition de signaux sonores et du logiciel exécutant des algorithmes pour déterminer la direction d'une source sonore à partir des signaux reçus par lesdits microphones, ces algorithmes sont communément désignés par « DOA » signifiant « Direction Of Arrival » selon une terminologie anglo-saxonne. L'estimateur linéaire, dit « de Bartlett » est une méthode simple et éprouvée parmi les méthodes de DOA actuellement connues. Cette méthode fonctionne particulièrement pour des systèmes calculant la direction d'émission de signaux sinusoïdaux sans bruit ni de déformation, car ces signaux sont sensibles aux réverbérations et absorption par l'environnement. D'autres algorithmes utilisent des temps d'arrivée du son (« TOA » signifiant « Time Of Arrival » selon une terminologie anglo-saxonne) pour calculer des directions de sources sonores.

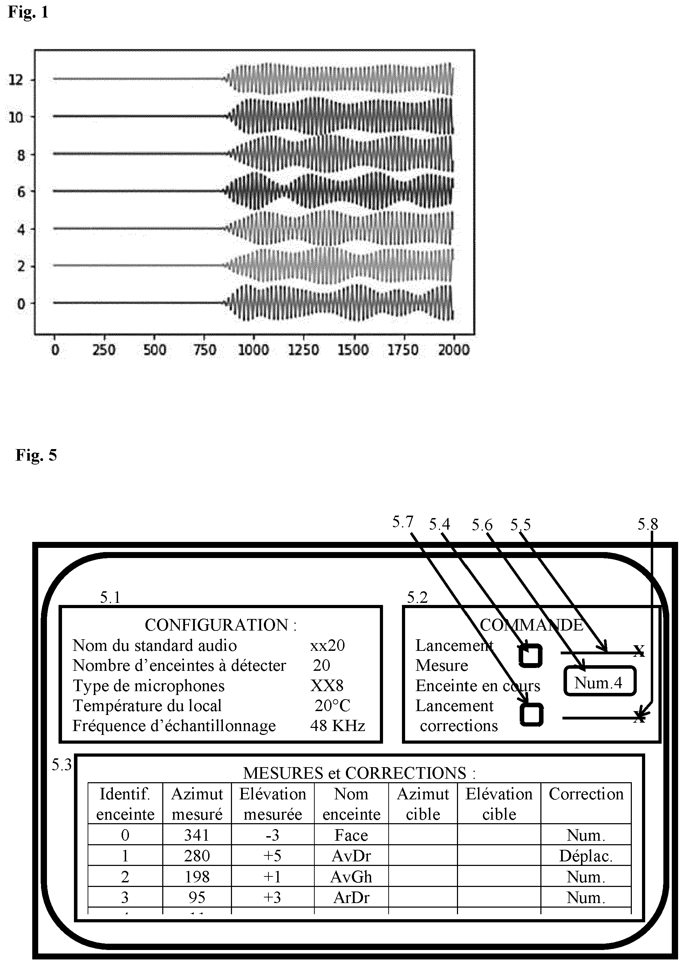

L'expérimentation montre que dans certains environnement, l'amplitude des signaux acoustiques captés par les microphones varie considérablement. La Fig. 1 décrit l'émission de signaux acoustiques sinusoïdaux tels qu'ils sont captés par le réseau de microphones, ces signaux étant numérisés et enregistrés dans le système audio. On peut constater des amplitudes très différentes bien que ce soit le même signal sonore émis par la même source sonore, de ce fait l'exploitation des résultats n'est pas satisfaisante. De plus, l'émission d'un son de nature sinusoïdale est peu agréable à entendre, et on lui préfère un bruit blanc, ou rose, ou simplement quelconque.

Le document FR3081641, publié le 29 Novembre 2019 décrit un système permettant de localiser dans un environnement 3D des sources sonores. Les signaux sonores permettent d'établir une carte d'activité acoustique dans un espace de localisation des sources sonores à N dimensions, et de projeter cette carte sur un axe de façon à limiter les dimensions et simplifier les calculs.

Il existe donc un réel besoin d'estimation d'une direction d'une source sonore dans un environnement 3D qui procure à la fois une bonne précision et un meilleur confort d'écoute lors de l'étape d'estimation de la direction.

## 3. OBJECTIFS DE L'INVENTION

La présente invention a donc pour but, en évitant ces inconvénients, de fournir un procédé de détermination de la direction d'une source sonore, en utilisant un bruit plus agréable à entendre qu'un son de nature sinusoïdale, et en améliorant la précision des données définissant la direction des sources

## 4. PRESENTATION DE L'INVENTION

A cet effet, l'invention concerne un procédé de détermination de la direction d'une source sonore selon la revendication indépendante 1, ce procédé comportant les étapes suivantes :

- émission par l'au moins une source sonore d'un son et enregistrement des signaux sonores reçus par un réseau de microphones,
- exécution de corrélations croisées entre les signaux reçus afin d'en déduire les temps d'arrivée relatifs,
- création, pour chaque microphone, d'un signal sinusoïdal du temps ayant une fréquence déterminée et un déphasage dépendant des temps d'arrivée relatifs,
- calcul de détermination d'une valeur de direction de la source sonore selon un repère spatial défini par le réseau de microphones en utilisant comme paramètre d'entrée les signaux sinusoïdaux du temps,
- présentation de la valeur de direction.

De cette manière, le son émis par les sources sonores n'a pas de contraintes et il peut être rendu plus agréable à un auditeur qu'un son de nature sinusoïdale comme le préconise les méthodes connues de DOA. De plus, la création de signaux sinusoïdaux et déphasés en fonction des temps d'arrivée relatifs et leurs utilisations en tant que paramètres d'entrée, permettent d'utiliser de façon performante ces méthodes de DOA.

Selon un premier mode de réalisation, la valeur de direction comporte une donnée d'azimut et une donnée d'élévation. De cette manière la position de l'enceinte acoustique est déterminée précisément par rapport à la position du réseau de microphones.

Selon un autre mode de réalisation, l'étape de calcul de détermination de la donnée d'azimut utilise en entrée des signaux sinusoïdaux d'une première fréquence uniquement et le calcul de détermination de la donnée d'élévation utilise en entrée des signaux sinusoïdaux d'une seconde fréquence. De cette manière, la création des deux fonctions sinusoïdales est adaptée au calcul de l'azimut et de l'élévation.

Selon un autre mode de réalisation, la première fréquence est prise dans l'intervalle compris entre 3000 Hz et 3800 Hz, et en ce que la seconde fréquence est prise dans l'intervalle compris entre 6000 Hz et 6800 Hz. De cette manière, la précision du calcul de l'azimut et de l'élévation est améliorée.

Selon un autre mode de réalisation, l'étape d'exécution de corrélations croisées entre les signaux reçus des microphones comporte une première étape de corrélation croisée sur toute la durée de l'enregistrement pour en déduire une valeur de maximum de corrélation et une seconde étape de corrélation croisée autour de la valeur de maximum de corrélation en utilisant des données suréchantillonnées obtenues à partir de l'enregistrement des signaux sonores. De cette manière, la précision des valeurs de direction est encore améliorée.

Selon un autre mode de réalisation, l'étape de calcul de détermination d'une valeur de direction comprend la méthode de Bartlett. De cette manière, le procédé utilise une méthode éprouvée pour calculer les valeurs d'azimut et d'élévation.

Selon un autre mode de réalisation, le procédé comporte une étape d'interpolation polynomiale exécutée après les étapes de corrélation croisée et consistant à appliquer un polynôme du second ordre aux données résultant de l'étape de corrélation croisée des échantillons du son situés avant et après le maximum de corrélation. De cette manière, la précision du calcul de l'azimut et de l'élévation est améliorée.

Selon un autre mode de réalisation, le procédé comporte une étape de détermination du haut et du bas, en utilisant un microphone supplémentaire situé à l'extérieur du plan dans lequel les autres microphones sont situés. De cette manière, il est possible de mettre un signe pour les valeurs d'élévation. Selon un autre mode de réalisation, le son émis par l'au moins une source sonore est un bruit blanc ou rose. De cette manière, ce son est peu sensible aux perturbations de l'environnement et est plus agréable à entendre.

Selon un autre mode de réalisation, le procédé comporte les étapes supplémentaires suivantes :

- sélection d'un standard audio définissant la direction d'au moins une source sonore par rapport à l'endroit où est censé se trouver un auditeur,
- récupération des positions cible de chaque source sonore associées au standard audio sélectionné,
- calcul de l'écart entre les valeurs de direction calculées et les valeurs récupérées et comparaison de l'écart entre les valeurs avec une valeur de seuil,
- sélection d'une stratégie selon que la valeur de l'écart est inférieur ou supérieur à la valeur de seuil, ladite stratégie visant à réduire l'écart entre la direction récupérée et la direction perçue par un auditeur placé à l'endroit du réseau de microphones. De cette manière, il est possible de conseiller un installateur sur la façon d'améliorer le rendu acoustique de l'installation et de résoudre par l'informatique des défauts minimes de positionnement en évitant l'intervention de l'installateur.

Selon un autre mode de réalisation, la valeur de seuil est différente pour l'évaluation de l'azimut et pour l'évaluation de l'élévation.

Selon un autre mode de réalisation, le procédé comporte en outre une étape d'affichage d'une valeur de direction cible d'au moins une source sonore avec une indication spécifiant que la valeur est figée par l'utilisateur. De cette manière, un installateur de préférence professionnel, peut s'affranchir des recommandations spécifiées par le standard audio et qui s'appliquent pour certains haut-parleurs et peut décider lui-même de les placer définitivement à des endroits déterminés.

Selon un autre mode de réalisation, le procédé comporte une étape d'affichage d'une indication représentative de la correspondance entre les positions déterminées des sources sonores et les positions théoriques associées au standard audio sélectionné. De cette manière, un installateur professionnel qui regarde son interface de communication n'a plus besoin de chercher des valeurs précise mais peut d'un seul coup d'œil voir si son installation est plus ou moins conforme à ce que recommande le standard audio.

Selon un autre mode de réalisation, le procédé comporte une étape de détermination du format du contenu audio, ledit format définissant des positions de sources sonores, et une étape de modification des paramètres transmis au processeur audio afin de créer des sources sonores virtuelles en utilisant les positions des sources sonores utilisant le procédé objet de l'une quelconque des revendications précédentes. De cette manière, le système audio s'adapte dynamiquement en fonction de chaque contenu audio reproduit, en créant des sources fantômes qui correspondent au format du contenu reproduit.

Selon un autre aspect, l'invention concerne un procédé de configuration d'un système audio comportant une étape de détermination des positions de sources sonores utilisant le procédé décrit ci-dessus, et une étape de comparaison de l'ensemble des positions des sources sonores avec des listes de positions associées à des configurations standards, la configuration standard dont les positions sont les plus proches étant alors sélectionnée et utilisée pour configurer le système audio. De cette manière, le système audio apporte une aide significative à l'installateur pour sa configuration.

Selon un autre aspect, et selon la revendication indépendante 16, l'invention concerne un système audio de détermination d'une direction comportant au moins une source sonore et un réseau de microphones captant le son émis par cette source sonore, un moyen d'émission par l'au moins une source sonore d'un son, un moyen d'enregistrement des signaux sonores reçus par les microphones, un moyen d'exécution de corrélations croisées entre les signaux reçus afin d'en déduire des temps d'arrivée relatifs, un moyen de création, pour chaque microphone, d'un signal sinusoïdal du temps ayant une fréquence déterminée et un déphasage dépendant des temps d'arrivée relatifs, et un moyen de détermination d'une valeur de direction de la source sonore selon un repère spatial défini par le réseau de microphones en utilisant comme paramètre d'entrée les signaux sinusoïdaux du temps, ladite valeur de direction ainsi déterminée étant présentée sur un support .

## 5. DESCRIPTION DES FIGURES

D'autres caractéristiques et avantages de l'invention apparaîtront à la lecture de la description suivante, donnée à titre d'exemple indicatif et non limitatif, et des dessins annexés, dans lesquels :

- [Fig 1] : la figure 1 décrit l'émission de signaux acoustiques de nature sinusoïdale tels qu'ils pourraient être captés de nos jours par un réseau de microphones,
- [Fig 2] : la figure 2 décrit un exemple de réalisation d'un système audio permettant de déterminer la direction d'au moins une source sonore,

- [Fig 3] la figure 3 illustre un exemple de représentation d'un réseau de microphones permettant de capter le son émis par une source sonore,
- [Fig 4] : la figure 4 décrit un ordinogramme d'un procédé de détection de la direction d'une source sonore au moins, selon un exemple de réalisation,
- [Fig 5] : la figure 5 représente un exemple de menu d'une interface utilisateur pour déterminer la direction d'enceintes acoustiques.

## 6. DESCRIPTION DETAILLEE D'UN MODE DE REALISATION

6.1 Principe général

L'invention concerne un procédé de détermination d'une direction d'une source sonore à l'aide d'un système audio captant par un réseau de microphones le son émis par cette source sonore. Le procédé comporte les étapes suivantes : émission par la source sonore d'un son et enregistrement des signaux sonores reçus par le réseau de microphones, exécution de corrélations croisées entre les signaux reçus afin d'en déduire des temps d'arrivée relatifs, création, pour chaque microphone, un signal sinusoïdal du temps ayant une fréquence déterminée et un déphasage dépendant des temps d'arrivée relatifs, calcul de détermination d'une valeur de direction de la source sonore selon un repère spatial défini par le réseau de microphones en utilisant comme paramètre d'entrée les signaux sinusoïdaux du temps, présentation de la valeur de direction. De cette manière, i n'y a pas de contraintes sur la nature du bruit que doit émettre les sources sonores, et il est possible d'utiliser les méthodes connues et éprouvées de calcul de direction qui sont plus performantes lorsque des signaux sinusoïdaux leur sont fournis comme paramètres d'entrée.

6.2 Mode préféré de réalisation

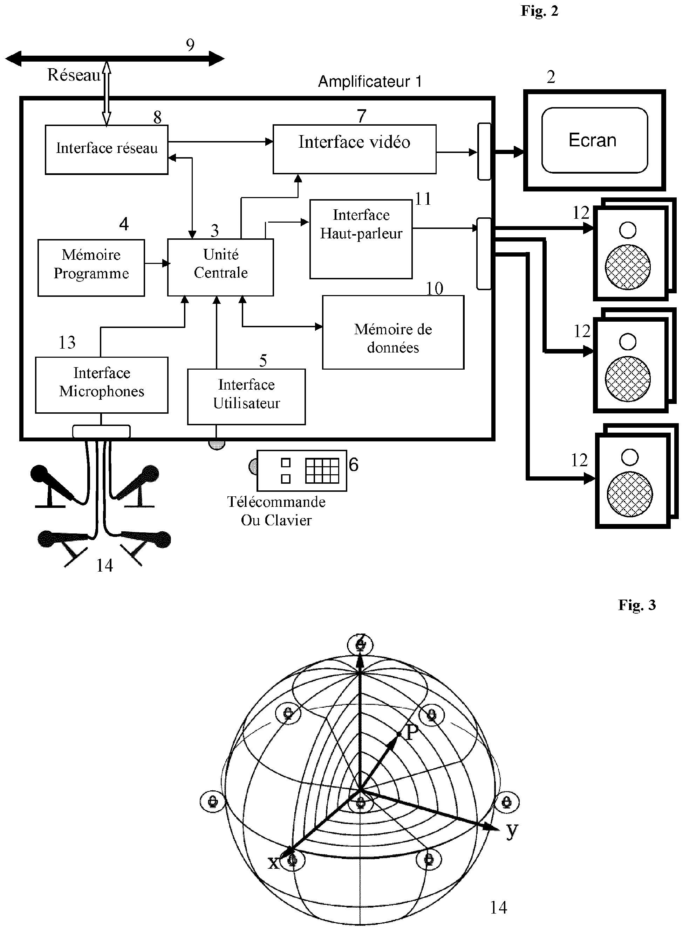

La Fig. 2 décrit un exemple de réalisation d'un système audio permettant de déterminer la direction d'au moins une source sonore. Ce système présente un amplificateur audio 1 connecté à un dispositif d'affichage 2 tel qu'un écran de visualisation ou un vidéoprojecteur. L'écran est notamment destiné à afficher des menus de configuration et des valeurs de direction d'enceintes acoustiques dans un espace 3D. L'amplificateur audio 1 est doté d'une unité centrale 3 reliée notamment à une mémoire 4 contenant des programmes exécutables, une interface de réception de signaux infrarouges 5 pour recevoir des signaux d'un clavier ou d'une télécommande 6, une interface vidéo 7 pour la création de signaux visuels envoyés au dispositif d'affichage 2. L'interface vidéo 7 dispose d'un circuit de génération de texte et de graphisme permettant d'afficher à l'écran du texte, des graphiques, des pictogrammes en superposition ou non d'un contenu visuel. L'interface vidéo 7 est contrôlée par l'unité centrale 3 en association avec un programme exécutable enregistré dans la mémoire 4. Selon un exemple préféré de réalisation, l'amplificateur audio 1 est équipé d'une interface 8 pour la communication avec un serveur distant via un réseau numérique 9. Cette connexion permet de recevoir des contenus audio ou audiovisuels à des fins de reproduction, et des données de configuration pour recevoir des paramètres de standards audio par exemple. La communication peut s'effectuer à courte ou longue portée, par exemple avec un réseau local sans fil (Wifi ou Bluetooth). La télécommande ou clavier 6 émet des signaux vers l'interface 5 pour contrôler le fonctionnement de l'amplificateur audio 1, le volume par exemple. L'amplificateur audio 1 est également doté d'une mémoire de données 10 pour le stockage de données de configuration et éventuellement de contenus audios.

Selon un aspect important de l'invention, l'amplificateur audio 1 comporte une interface audio 11 pour amplifier des signaux analogiques vers une pluralité d'enceintes acoustiques 12. Selon une variante, les enceintes acoustiques sont alimentées par le secteur et l'amplificateur 1 délivre un signal faible puissance. Selon un autre mode de réalisation, la liaison avec les enceintes acoustiques, filaire ou par radio, est de type numérique, les enceintes décodant un flux de données numériques pour fournir un signal analogique aux haut-parleurs.

Selon un premier mode de réalisation, l'amplificateur audio 1 comporte un circuit d'interface 13 avec un réseau de microphones 14 destinés à capter le son ambiant, et notamment les signaux acoustiques émis par les enceintes 12. Selon ce premier mode de réalisation, la mémoire programme 4 comporte un logiciel de détermination de la direction des enceintes acoustiques 12 en fonction des signaux acoustiques captés par le réseau de microphones 14. Selon un autre mode de réalisation, le réseau de microphones est connecté à un ordinateur lui-même en communication avec l'amplificateur 1. Dans ce cas, le réseau de microphones est connecté à une carte électronique insérée dans l'ordinateur de type PC par exemple, cette carte électronique est dotée d'entrées dont le nombre est au moins égal à celui des microphones du réseau 14. L'ordinateur effectue les mesures acoustiques en contrôlant l'amplificateur 1, calcule les directions des enceintes acoustiques 12 et transmet les éventuelles corrections à appliquer aux signaux sonores.

La Fig. 3 illustre une représentation d'un réseau de microphones 14 permettant de capter le son émis par une source sonore au moins, selon un exemple préféré de réalisation. Le réseau dispose d'au moins quatre microphones disposés par exemple aux sommets d'un tétraèdre régulier, ce qui constitue la solution la plus économique. D'autres dispositions sont possibles comme celle décrite par la Fig. 3 consistant en une couronne de 6 microphones répartis à intervalles réguliers sur la circonférence d'un cercle, un septième est placé au centre de ce cercle et un huitième est placé en hauteur à la verticale du septième. Dans ce mode de réalisation, le rayon du cercle est de 97 millimètres. Ce huitième microphone ne participe pas aux calculs de direction proprement dits mais permet de détecter le haut et le bas du réseau 14 et ainsi de mettre un signe dans la valeur d'élévation associée à chaque enceinte acoustique. Une autre disposition consiste à utiliser six microphones répartis régulièrement sur la circonférence d'un cercle, un septième placé en hauteur sur la droite verticale partant du centre du cercle. Les microphones sont de préférence omnidirectionnels avec une bande passante à 3 db de 100 Hz à 10 KHz.

L'exemple de réalisation avec 6 microphones a produit les meilleurs résultats du fait de sa symétrie centrale autour d'un axe vertical comportant le septième et le huitième microphone. L'expérimentation s'est déroulée en positionnant le réseau de microphones 14 à 4 mètres des plus proches enceintes acoustiques 12, mais cette valeur n'est qu'indicative, il est évident qu'en disposant d'un local plus grand, cette distance augmente. De façon générale, plus il y a de microphones disposés sur le cercle, plus le système enregistre de petits écarts et est moins sensible aux bruits.

Après avoir détaillé les éléments principaux du dispositif de mesure, la façon dont ceux-ci coopèrent va maintenant être expliquée.

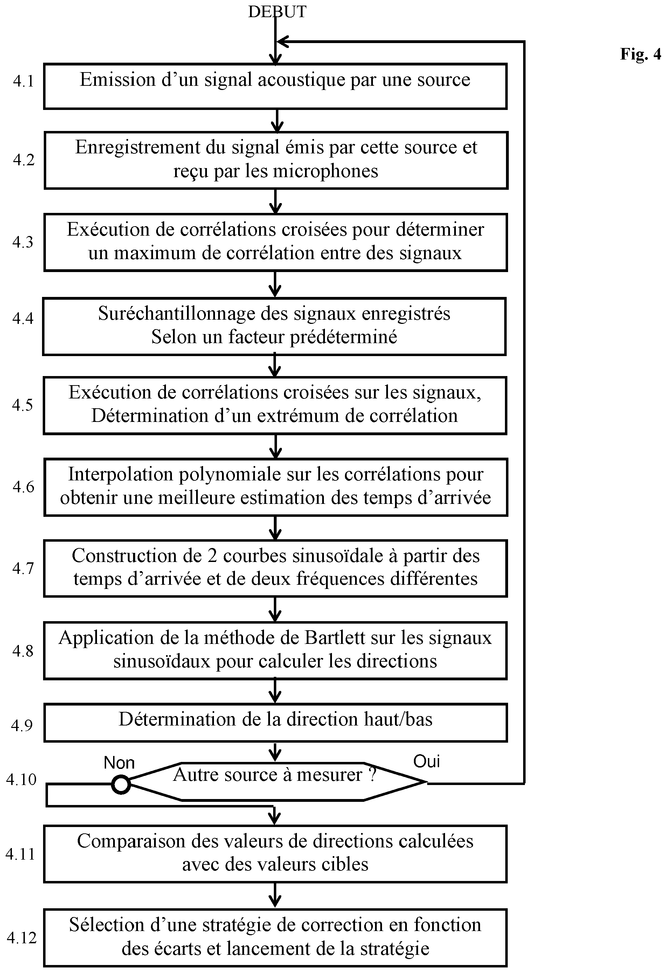

La Fig. 4 décrit un ordinogramme d'un procédé de détermination de la direction d'au moins une source sonore, selon un exemple de réalisation.

L'invention se situe par exemple dans le contexte d'une installation acoustique comprenant un amplificateur et une pluralité de haut-parleurs, éventuellement couplée à un écran ou un vidéoprojecteur de façon à créer un véritable home cinéma.

Dans un premier temps, un installateur positionne les enceintes acoustiques dans des positions telles que préconisées par le constructeur de l'installation acoustique. Prenons un exemple très simple d'une installation dotée de cinq enceintes acoustiques, les positions sont indiquées par exemple de la façon suivante :

| Identifiant haut-parleur | Indications préconisées par le constructeur |
|---|---|
| Devant central | A 4 mètres de distance, en face des auditeurs |
| Devant gauche | 30° à gauche en avant, à 4,5 m des auditeurs |
| Devant droit | 30° à droite en avant, à 4,5 m des auditeurs |
| Arrière gauche haut | 45° à gauche en arrière, à 4,5 m des auditeurs |
| Arrière droit haut | 45° à droite en arrière, à 4,5 m des auditeurs |

A l'étape 4.1, l'amplificateur 1 génère un son de nature non sinusoïdale vers une première enceinte acoustique. Bien que les signaux de nature sinusoïdale constituent de bons paramètres d'entrée pour estimer des directions en utilisant des méthodes telles que celle de Bartlett, les réflexions et absorptions dues à l'environnement déforment considérablement les signaux acoustiques mais n'ont peu d'effet impliquant de grandes différences sur l'onde reçue directement par le réseau de microphone. L'expérimentation et la théorie ont montré qu'un son de nature non sinusoïdale possède un bon rapport signal sur bruit et produit de bons résultats qui sont indépendants de l'environnement. Les courbes de corrélations appliquées sur des paires de microphones présentent un pic clair avec ce type de signaux, ce qui permet une meilleure séparation de la source et des parasites. Il est également plus confortable pour les auditeurs d'entendre un bruit rose ou blanc qu'un signal sinusoïdal pur.

Selon un exemple de réalisation, l'amplificateur 1 est doté d'un générateur de bruit rose. Rappelons ici qu'un bruit rose est un signal aléatoire dont la densité spectrale est constante par bande d'octave et que sa densité spectrale de puissance est inversement proportionnelle à la fréquence du signal. L'un des sons naturels se rapprochant le mieux d'un bruit rose est celui d'un torrent ou d'une cascade, produit par les fréquences aléatoires s'additionnant au choc des masses d'eau plus ou moins importantes sur les rochers. Un tel bruit est donc assez agréable à entendre.

Le bruit émis par cette première enceinte acoustique est capté par le réseau de microphones, et enregistré sous la forme de suites d'échantillons sonores (étape 4.2). Plus précisément, les signaux analogiques transmis par les microphones sont numérisés par un convertisseur A/D et les données ainsi produites sont enregistrées dans la mémoire 10.

Une fois que les données transmises par chaque microphone pour une enceinte donnée sont enregistrées, le système audio exécute des corrélations croisées entre des données provenant de paires de microphones (étape 4.3). La corrélation croisée est un calcul utilisé pour déterminer une valeur proportionnelle au degré de corrélation de deux signaux. Cela consiste en une convolution effectuée entre deux signaux donnant un troisième signal résultant de la corrélation entre les deux. Ce troisième signal possède une valeur qui augmente, atteint un maximum et diminue lorsque deux signaux identiques se trouvent en entrée. En produisant un signal purement aléatoire tel qu'un bruit blanc ou rose, on constate que le maximum de corrélation est représenté par un pic net et facilement détectable, car différents bruits blancs ou rose sont totalement décorrélés. La corrélation croisée s'inspire de la méthode décrite par Peter D. Welch, mais cette méthode n'est donnée qu'à titre d'exemple. L'expérimentation a permis de déterminer qu'une longueur de signal de 32768 échantillons et un chevauchement de 75% sont suffisants pour stabiliser les résultats.

Une première passe s'exécute sur les signaux de façon à déterminer le maximum dans la courbe des valeurs de corrélation, entre les données provenant d'une paire de microphones, le maximum de cette courbe permettant de calculer les temps d'arrivée relatifs d'un même signal acoustique capté par une paire de microphones. Cette première passe est rapide car elle s'effectue sur peu de données mais produit un résultat peu précis, Il est alors nécessaire d'affiner les valeurs autour du maximum de corrélation. Pour cela, à l'étape 4.4, une étape de sur-échantillonnage est appliquée sur les données enregistrées de façon à produire des données plus précises par interpolation. L'expérimentation a montré qu'un suréchantillonnage de seize fois pour atteindre 768 KHz procure de bons résultats tout en n'utilisant pas trop de puissance et de temps de calcul. Le suréchantillonnage commence par insérer quinze emplacements entre chaque échantillon, et à les initialiser à « 0 ». Puis, un filtre passe-bas avec une fréquence de coupure d'environ 20 kHz est appliqué sur les données pour reconstruire le signal et remplir les emplacements avec des valeurs significatives. Dans l'exemple de réalisation, un filtre FIR à 1056 coefficients est utilisé pour effectuer ce suréchantillonnage.

Une seconde étape de corrélation croisée s'applique alors sur les données obtenues par sur-échantillonnage (étape 4.5) afin de déterminer une valeur proportionnelle au degré de corrélation entre deux paquets d'échantillons. Le fait d'appliquer deux étapes de corrélation croisée permet de gagner du temps, la première fournissant des résultats grossiers qui sont affinés par la seconde.

A l'étape 4.6, une interpolation polynomiale est appliquée sur les valeurs de corrélation croisée pour obtenir une meilleure estimation des temps d'arrivée relatifs. Pour atteindre une résolution inter-échantillons, un polynôme du second ordre est appliqué aux données résultant de l'étape de corrélation croisée des échantillons situés avant et après le maximum. De cette façon, les corrélations croisées permettent d'estimer un délai d'arrivée inter-échantillons plus précis. Les temps d'arrivée relatifs TOA déterminés à l'issue de l'étape précédente sont utilisés pour créer une courbe de nature sinusoïdale pour chaque microphone (étape 4.7). Rappelons qu'un signal sinusoïdal est caractérisé par son amplitude maximale A et sa fréquence, il peut s'exprimer mathématiquement par la fonction suivante :

$$s(t) = A \sin (P \times t + ph).$$

Où : A est l'amplitude sans unité, P : la pulsation de la grandeur en radian par seconde, t : le temps en seconde, ph : la phase à l'origine (en radian).

Les courbes sinusoïdales sont construites avec des retards correspondant aux TOA estimés et sont ensuite utilisées comme paramètre d'entrée pour une estimation de la DOA selon la méthode de Bartlett. Chacune de ces courbes est une modélisation théorique du son émis par la source sonore dont on veut calculer la position et reçu par un microphone en passant à travers un environnement sans réverbération ni absorption. Les courbes sinusoïdales ainsi crées sont déphasées l'une par rapport à l'autre en fonction des temps d'arrivée relatifs TOA. Selon un perfectionnement, deux courbes sont calculées et associées à chaque microphone, l'une avec une première fréquence est destinée à calculer l'azimut, et l'autre avec une seconde fréquence est destinée à calculer avec précision l'élévation. En utilisant un réseau de 8 microphones, l'expérimentation a donné de bons résultats en utilisant une première fréquence de 3400 Hz (+/- 5%) et une seconde fréquence de 6400 Hz (+/- 5 %). La détermination des fréquences est obtenue par la modélisation mathématique du système considéré. Les signaux sonores théoriquement captés par les microphones ainsi que la position théorique des sources sont connus. En faisant varier la fréquence de construction des signaux sinusoïdaux en entrée de la modélisation, on estime en sortie des positions de sources fantômes introduites dans la modélisation. Il suffit alors de comparer les valeurs de positions estimées avec ces différentes fréquences et les valeurs de position définies dans la modélisation pour déterminer la fréquence minimisant au mieux les erreurs d'estimation de direction. De cette manière, les fréquences qui maximisent le bon comportement de simulation du système, sont calculées. On peut également noter que la fréquence ainsi déterminée dépend principalement de la géométrie du réseau de microphones, la modélisation étant alors plus simple au niveau de la propagation des ondes acoustiques (qui rayonnent autour de la source) et de l'influence de l'environnement (on ne prend en compte que la réverbération).

A ce stade, la vitesse du son est prise en compte pour une meilleure précision des données calculées. En effet, les méthodes DOA dépendent de la vitesse du son. Comme ils l'utilisent dans une exponentielle pour décrire la décroissance de phase entre les microphones, une petite erreur dans la vitesse du son peut conduire à une mauvaise estimation de la position. C'est pourquoi le logiciel demande à l'installateur d'indiquer la température ambiante. Une équation calculant la vitesse du son en fonction de la température ambiante est utilisée pour ajuster les vecteurs de direction. Selon un perfectionnement qui n'a pas été implémenté dans le prototype, l'équation permettant de calculer la vitesse du son prend en compte non seulement la température, mais aussi l'humidité et la pression atmosphérique.

A l'étape 4.8, la méthode de Bartlett est appliquée en utilisant les caractéristiques des deux courbes sinusoïdales créées à l'étape précédente. Cette méthode pour calculer des DOA est bien connue, notamment à travers des ouvrages tels que le document HAL « Comparative Study between Several Directions of Arrival, Estimation Method », de Youssef KHMO, Saïd Safi, Miloud FRIKEL. Cette méthode n'est donc pas à expliciter davantage dans ce document. La valeur d'azimut est d'abord calculée en utilisant toutes les paires possibles de microphones situés sur un même plan. En utilisant le réseau de microphones tel que décrit par la Fig. 3, sept microphones permettent de créer vingt et une paires possibles. Le nombre important de microphones en périphérie permet d'obtenir une bonne précision pour la valeur de l'azimut, de l'ordre de 2° . Puis le calcul de l'élévation s'effectue en utilisant les mêmes paires de microphones et une autre fréquence pour obtenir une valeur d'une précision de l'ordre de 5° . Les calculs exécutés dans les étapes 4.3 à 4.8 sont répétés en choisissant d'autres paires de microphones. Chaque signal capté par un microphone est comparé par une corrélation croisée avec celui d'un autre microphone, ainsi chaque comparaison génère un retard relatif qui peut être ramené sans grande complexité à un retard relatif au microphone central, le septième selon le mode de réalisation décrit par la Fig. 2. Tous les résultats de corrélation croisée sont relativisés par rapport au microphone central et moyenné. De cette manière, tous les signaux sont combinés entre eux de toutes les façons possibles, produisant des retards relatifs à chaque microphone, ces retards sont ramenés pour être relatif au microphone central en utilisant les retards relatifs calculés avec ce microphone central. La dernière opération consiste à moyenner les valeurs calculées qui sont toutes relatives au microphone central, et ainsi obtenir la meilleure précision possible.

L'ensemble des sept microphones étant sur un même plan, ce réseau ne permet pas de déterminer le haut et le bas. Pour distinguer cela et au cours de l'étape 4.9, on utilise le huitième microphone (selon le mode de réalisation décrit par la Fig. 2) qui est placé à la verticale du plan contenant les premiers microphones, à une hauteur au-dessus dudit plan de préférence égale au rayon. Ce microphone ne permet pas de calculer un meilleur vecteur de direction de Bartlett car il brise la symétrie centrale. Néanmoins, il crée un triangle rectangle avec le septième microphone et un rayon du cercle, qui est suffisant pour calculer une élévation. La détermination du haut et du bas permet notamment d'ajouter un signe à la valeur d'élévation.

A l'étape 4.10, le procédé teste s'il reste d'autres enceintes acoustiques 12 dont la position est à déterminer. Si c'est le cas, alors le procédé reboucle à l'étape 4.1 et reprogramme l'amplificateur 1 pour générer le même bruit vers une autre enceinte acoustique. La boucle ainsi générée permet d'enregistrer séquentiellement un ensemble de suites d'échantillons sonores associées à chaque enceinte et destinées à en calculer la position. Lorsque toute les enceintes ont produit un son, l'étape d'analyse des données enregistrées peut commencer. De cette manière, l'émission du son successivement par chaque enceinte s'effectue en un bloc temporel et est plus agréable à entendre. Selon une variante de réalisation, l'ensemble des signaux acoustiques sont émis par les différentes sources sans analyser leurs directions, tous les signaux sont ainsi enregistrés et ensuite intervient l'analyse des données pour déterminer toutes les directions des sources sonores. Selon une autre variante, dès qu'un ensemble de signaux acoustiques émis par une même source est enregistré alors les signaux sont analysés, et en parallèle, on enregistre un autre ensemble de signaux acoustiques émis par une autre source.

A l'étape 4.11, les valeurs d'azimut et d'élévation qui viennent d'être déterminées sont comparées avec des valeurs cibles, spécifiques du standard audio sélectionné par l'installateur. Le standard audio sélectionné définit la direction (en termes d'azimut et d'élévation) de chaque source sonore par rapport à l'endroit où un auditeur est censé se trouver.

Dès lors, il est possible d'indiquer à l'installateur si chaque enceinte acoustique est au bon endroit ou s'il doit la déplacer. Pour cela l'installateur sélectionne au niveau de l'interface utilisateur, un standard de reproduction, ce standard devra spécifier le même nombre d'enceintes acoustiques que celui détecté par le système audio. Chaque enceinte est référencée par un identifiant, qui est associé à des valeurs d'azimut et d'élévation spécifié par ce standard audio. Voici un exemple d'une table pour une installation avec cinq enceintes, (bien sûr ce nombre peut être nettement plus grand pour des installations performantes) :

| Identifiant haut-parleur | Valeurs mesurées | Valeurs du standard |
|---|---|---|
| Devant central | (2° ,0° ) | (0,0) |
| Devant gauche | (22° ,0° ) | (30° ,0° ) |
| Devant droit | (-25° ,0° ) | (-30° ,0° ) |
| Arrière gauche haut | (122° ,0° ) | (135° ,0° ) |
| Arrière droit haut | (-120° ,0° ) | (-135° ,0° ) |

Les valeurs du standard sont spécifiées par des comités de normalisation dans le domaine des systèmes audio. Le procédé comporte une étape de sélection d'un standard parmi plusieurs. Selon une variante de réalisation, le procédé propose un standard préconisé par le fabriquant du système audio mettant en œuvre l'invention.

Une fois calculés les écarts entre les valeurs de direction calculées et les valeurs récupérées, le procédé élabore une stratégie de correction permettant de compenser les défauts de positionnement des sources sonores.

Une première stratégie consiste à créer des sources « fantômes ». Pour cela, on utilise deux à trois haut-parleurs pour créer une source fantôme qu'un auditeur situe par sa perception auditive à un endroit où une seule enceinte acoustique devrait se trouver. Cette illusion est créée par la diffusion de signaux cohérents, avec un gain spécifique, sur deux ou trois enceintes. Ce principe est identique à celui d'un signal panoramique stéréo mais étendu à l'espace 3D. De ce fait, un signal destiné à un seule enceinte acoustique est en fait transmis avec des pondérations différentes à deux ou trois enceintes situées autour d'une position cible définie selon le standard audio. Une seconde stratégie consiste à émettre des recommandations à l'installateur pour qu'il déplace physiquement l'enceinte acoustique.

L'étape 4.12 décrit le choix entre l'une ou l'autre stratégie en fonction des écarts entre les valeurs de direction calculées et les valeurs récupérées. Si l'écart est en-dessus d'une valeur de seuil déterminé, le procédé émet la recommandation de déplacement de l'enceinte acoustique. Lorsque l'écart est en-dessous d'une valeur de seuil, l'amplificateur peut modifier le son émis vers une ou plusieurs enceintes situées approximativement dans cette direction pour donner l'impression à l'auditeur que le son provient de la position cible. Selon un perfectionnement, les seuils pour l'azimut et pour l'élévation sont différents. Par exemple, si l'écart entre la valeur d'azimut calculée et celle du standard dépasse 10° alors un déplacement de l'enceinte est recommandé. De même, si l'écart entre la valeur d'élévation calculée et celle du standard dépasse 15° alors un déplacement de l'enceinte est recommandé. Un déplacement de l'enceinte est recommandé si l'un et/ou l'autre des écarts dépasse le seuil correspondant.

La Fig. 5 représente un exemple d'un menu affiché sur l'écran 2 permettant à l'installateur d'analyser une première fois la direction des enceintes acoustiques 12, de recevoir des recommandations pour améliorer le confort d'écoute et ainsi être le plus proche d'un standard audio et de configurer son système audio à des fins de reproduction.

Ce menu comporte typiquement :

- une fenêtre de configuration 5.1,
- une fenêtre 5.2 de commande et d'état,
- une fenêtre 5.3 de mesure et de présentation des recommandations.

La fenêtre de configuration 5.1 affiche typiquement et de façon non limitative les informations suivantes :

- le nom et/ou les caractéristiques du standard audio,
- le nombre d'enceintes utilisés par le système,
- le type de réseau de microphones,
- la température du milieu où se trouve le système audio,
- la fréquence d'échantillonnage des signaux des microphones,
- le nombre d'échantillons pour l'enregistrement.

Selon un perfectionnement, le système audio détermine automatiquement le nom et/ou les caractéristiques du standard audio et configure ensuite le système audio avec les éléments découverts. Cette détermination consiste en une étape de détection de la position de chaque source sonore selon le procédé objet de l'invention et en une étape de comparaison de l'ensemble des positions avec des listes de paramètres associés à des configurations standards, du type par exemple X1.X2.X3.X4, où : X1 est le nombre de sources en couche basse (au niveau des oreilles), X2 est le nombre de sources dédiées aux fréquence basse, X3 est le nombre de sources fixées sur les murs du local, et X4 est le nombre de sources fixées au plafond. Selon cet exemple, le système audio dispose d'une bibliothèque d'ensembles de paramètres associés chacun à un standard audio. L'étape de détection fournit les directions et les nombres de sources positionnées selon chaque paramètres X1, X2, X3 et X4, ces directions et nombres sont ensuite comparés avec ceux des standards audios enregistrés en bibliothèque et le standard dont les nombres sont les plus proches est alors sélectionné et affiché à l'écran dans le fenêtre de configuration 5.1. D'autres éléments de comparaison peuvent être prises en compte pour déterminer le standard le plus proche, comme par exemple la bande passante des sources, ou la distance par rapport au réseau de microphones. Une icône affichée à proximité immédiate de l'identifiant du standard détecté permet à l'utilisateur de valider le choix proposé par le système audio, ce dernier configure alors les différents flux audio selon le standard validé par l'utilisateur. De cette manière, la configuration faite par l'utilisateur est simplifiés et les risques d'introduire un standard erroné sont limités.

La fenêtre de commande et d'état 5.2 affiche typiquement une icône 5.4 permettant de lancer la détermination de la position de chaque enceinte acoustique. Une ligne graphique 5.5 présente un curseur se déplaçant sur la ligne indique le niveau d'avancement de l'étape de détermination des positions, une fenêtre 5.6 affiche l'identifiant de l'enceinte qui fait actuellement l'objet de calcul. Une icône 5.7 permet de lancer l'exécution de l'émission de recommandations consécutivement à une phase de prise de mesure, une seconde ligne graphique 5.8 présente l'avancement du calcul de recommandation.

La fenêtre 5.3 de mesure et de recommandations affiche sous la forme d'un tableau les informations relatives à chaque enceinte acoustique après l'exécution des phases de mesure et d'émission de recommandations. Les colonnes de ce tableau affichent par exemple de gauche à droite :

- l'identifiant de l'enceinte, par exemple un numéro,
- la valeur d'azimut mesurée (en degré),
- la valeur d'élévation mesurée (en degré),
- le nom de l'enceinte en regard au standard audio sélectionné,
- la valeur d'azimut selon ce standard,
- la valeur d'élévation selon ce standard,
- le type de correction à effectuer.

Le type de correction à effectuer est soit de créer une « source fantôme » en modifiant les signaux des enceintes proches de cette direction (en affichant « Num »), de cette manière l'ouïe de l'auditeur perçoit une source venant d'un endroit où une enceinte devrait se trouver, soit de demander à l'installateur de déplacer l'enceinte car l'écart est trop important à compenser (en affichant « Déplac. »). Tant que le menu recommande des déplacements, il est préférable de les réaliser et de relancer une mesure pour vérifier que le déplacement a bien amélioré la qualité de la reproduction sonore. Comme il a été dit précédemment, ce menu peut être affiché sur un écran secondaire 2, son contenu est alors produit par l'amplificateur 1. Le menu peut aussi être celui d'un ordinateur portable, en communication avec l'amplificateur 1 et capable de recevoir et d'analyser les signaux sonores reçus du réseau de microphones 14. Selon un perfectionnement, le menu apparaissant à l'écran lors de la configuration de son système audio affiche un score de similarité représentatif de la correspondance entre les positions des sources sonores détectées par le procédé objet de l'invention et la configuration théorique associée au standard audio identifié dans la fenêtre 5.1. Ce score de similarité permet d'indiquer à l'usager à quel point le positionnement global des sources est proche de celui recommandé par le standard audio. Le score peut s'afficher sous la forme d'une note, variant de 0 à 10, 10 étant la valeur pour laquelle les sources sont installées à la bonne position. Le score peut aussi s'afficher sous la forme d'un code de couleur, le rouge signalant un mauvais positionnement, orange : un perfectionnement perfectible et vert un bon positionnement. Selon une variante, ce code de couleur peut s'appliquer à chaque source sonore et s'affiche individuellement pour chaque ligne du tableau apparaissant dans la fenêtre 5.3. Selon l'exemple affiché par la Fig. 5, la ligne associée à la source numéro 1 dont la recommandation est un déplacement, apparaît en rouge. De cette manière, l'usager peut aisément visualiser le score correspondant à son installation et œuvré itérativement à son amélioration. Un score maximal assure ainsi le meilleur niveau de fidélité sonore relativement à un choix de standard audio. D'autres icônes sont possibles pour introduire d'autres commandes, telles que celles d'enlever une enceinte, ou d'en rajouter une, d'introduire le degré d'humidité, la pression atmosphérique, ...

Selon un autre perfectionnement, l'utilisateur peut décider de figer la position (azimut et élévation) d'une ou plusieurs sources sonores et ainsi de ne plus prendre en compte les positions spécifiées par le standard audio qui est identifié dans la fenêtre 5.1 apparaissant dans la Fig. 5. Ce perfectionnement permet à l'utilisateur d'introduire ses propres corrections sans prendre en compte celles résultantes du flux décodé par le processeur audio. De cette manière, un installateur professionnel peut s'affranchir des recommandations spécifiées par le standard audio pour certains haut-parleurs et décider lui-même de les placer à des endroits déterminés. L'utilisateur décidant de s'écarter du standard audio, le score de similarité n'a donc plus de sens et n'est plus affiché. Les valeurs d'azimut cible et d'élévation cible qui apparaissent dans le tableau de la fenêtre 5.3 et qui correspondent à des positions figées par l'utilisateur, s'affichent avec une caractéristique graphique telle que : un soulignement, un clignotement ou une couleur particulière.

Selon un autre perfectionnement, lors de la reproduction d'un contenu audio, le système audio adapte son processeur audio (ou « codec ») en fonction du format du document audio et de la position des sources sonores détectée par le procédé tel que décrit précédemment. Rappelons qu'un codec est un dispositif matériel ou logiciel permettant de mettre en œuvre l'encodage ou le décodage d'un flux de données numérique, en vue d'une reproduction ou d'un stockage. Le format du contenu audio à reproduire spécifie la position de sources sonores. Le système audio crée des sources fantômes pour qu'elles se situent virtuellement aux positions définies par le format, et modifie les paramètres envoyés au codec en fonction de la position réelle des haut-parleurs. Cette étape de reprogrammation du processeur audio en vue de créer des sources fantômes s'effectue à chaque reproduction de contenu sonore, un affichage spécifique peut alors apparaître indiquant par exemple le nombre de sources fantômes. Bien que la présente invention ait été décrite en référence aux modes de réalisation particuliers illustrés, celle-ci n'est nullement limitée par ces modes de réalisation, mais ne l'est que par les revendications annexées. On notera que des changements ou des modifications pourront être apportés par l'homme du métier.

**Revendications**

1.   Procédé de détermination d'une direction d'au moins une source sonore (12) à l'aide d'un système audio captant par un réseau de microphones (14) le son émis par l'au moins une source sonore, comportant les étapes suivantes :

- émission (4.1) par l'au moins une source sonore d'un son et enregistrement des signaux sonores reçus par les microphones,
- exécution (4.3, 4.5) de corrélations croisées entre les signaux reçus afin d'en déduire les temps d'arrivée relatifs, le procédé comportant en outre les étapes suivantes :
- création (4.7), pour chaque microphone (14), d'un signal sinusoïdal du temps ayant une fréquence déterminée et un déphasage dépendant des temps d'arrivée relatifs,
- calcul de détermination (4.8) d'une valeur de direction de la source sonore selon un repère spatial défini par le réseau de microphones en utilisant comme paramètre d' entrée les signaux sinusoïdaux du temps,
- présentation de la valeur de direction.

2. Procédé de détermination d'une direction selon la revendication 1, dans lequel la valeur de direction comporte une donnée d'azimut et une donnée d'élévation.

3. Procédé de détermination d'une direction selon la revendication 2, dans lequel l'étape de calcul de détermination (4.8) de la donnée d'azimut utilise en entrée des signaux sinusoïdaux d'une première fréquence uniquement et en ce que le calcul de détermination de la donnée d'élévation utilise en entrée des signaux sinusoïdaux d'une seconde fréquence.

4. Procédé de détermination d'une direction selon la revendication 3, dans lequel la première fréquence est prise dans l'intervalle compris entre 3000 Hz et 3800 Hz, et en ce que la seconde fréquence est prise dans l'intervalle compris entre 6000 Hz et 6800 Hz.

5. Procédé de détermination d'une direction selon l'une quelconque des revendications précédentes, dans lequel l'étape d'exécution de corrélations croisées entre les signaux reçus des microphones comporte une première étape (4.3) de corrélation croisée sur toute la durée de l'enregistrement pour en déduire une valeur de maximum de corrélation et une seconde étape (4.5) de corrélation croisée autour de la valeur de maximum de corrélation en utilisant des données suréchantillonnées obtenues à partir de l'enregistrement des signaux sonores.

6. Procédé de détermination d'une direction selon l'une quelconque des revendication précédentes, dans lequel l'étape (4.8) de calcul de détermination d'une valeur de direction comprend la méthode de Bartlett.

7. Procédé de détermination d'une direction selon l'une quelconque des revendication précédentes, dans lequel il comporte une étape d'interpolation polynomiale exécutée après les étapes de corrélation croisée (4.3, 4.5) et consistant à appliquer un polynôme du second ordre aux données résultant de l'étape de corrélation croisée des échantillons du son situés avant et après le maximum de corrélation.

8. Procédé de détermination d'une direction selon l'une quelconque des revendication précédentes, dans lequel il comporte une étape de détermination (4.9) du haut et du bas, en utilisant un microphone supplémentaire situé à l'extérieur du plan dans lequel les autres microphones sont situés.

9. Procédé de détermination d'une direction selon l'une quelconque des revendication précédentes, dans lequel le son émis par l'au moins une source sonore est un bruit blanc ou rose.

10. Procédé de détermination d'une direction selon l'une quelconque des revendications précédentes, dans lequel il comporte les étapes supplémentaires suivantes :

- sélection d'un standard audio définissant la direction d'au moins une source sonore par rapport à l'endroit où est censé se trouver un auditeur,
- récupération des positions cible de chaque source sonore associées au standard audio sélectionné,
- calcul de l'écart entre les valeurs de direction calculées et les valeurs récupérées et comparaison de l'écart entre les valeurs avec une valeur de seuil,
- sélection (4.12) d'une stratégie selon que la valeur de l'écart est inférieure ou supérieure à la valeur de seuil, ladite stratégie visant à réduire l'écart entre la direction récupérée et la direction perçue par un auditeur placé à l'endroit du réseau de microphones.

11. Procédé de détermination d'une direction selon la revendication 10, dans lequel la valeur de seuil est différente pour l'évaluation de l'azimut et pour l'évaluation de l'élévation.

**12.** Procédé de détermination d'une direction selon l'une quelconque des revendications 10 et 11, dans lequel il comporte une étape d'affichage d'une valeur de direction cible d'au moins une source sonore avec une indication spécifiant que la valeur est figée par l'introduction d'une commande.

**13.** Procédé de détermination d'une direction selon l'une quelconque des revendications 10 et 12, dans lequel il comporte une étape d'affichage d'une indication représentative de la correspondance entre les positions déterminées des sources sonores et les positions théoriques associées au standard audio sélectionné.

**14.** Procédé de reproduction d'un contenu audio dans lequel il comporte une étape de détermination du format du contenu audio en cours de reproduction, ledit format définissant des positions de sources sonores, et une étape de modification des paramètres transmis au processeur audio afin de créer des sources sonores virtuelles en utilisant les positions des sources sonores utilisant le procédé objet de l'une quelconque des revendications précédentes.

**15.** Procédé de configuration d'un système audio dans lequel il comporte une étape de détermination des positions de sources sonores utilisant le procédé objet de l'une quelconque des revendications 1 à 12, et une étape de comparaison de l'ensemble des positions des sources sonores avec des listes de positions associées à des configurations standards, la configuration standard dont les positions sont les plus proches étant alors sélectionnée et utilisée pour configurer le système audio.

**16.** Système audio de détermination d'une direction comportant au moins une source sonore (12) et un réseau de microphones (14) captant le son émis par cette source sonore, comportant un moyen d'émission (11) par l'au moins une source sonore d'un son, un moyen d'enregistrement (10) des signaux sonores reçus par les microphones, un moyen d'exécution (3, 4) de corrélations croisées entre les signaux reçus afin d'en déduire les temps d'arrivée relatifs, le système comportant en outre les moyens suivants : un moyen de création (3, 4), pour chaque microphone (14), d'un signal sinusoïdal du temps ayant une fréquence déterminée et un déphasage dépendant des temps d'arrivée relatifs, et un moyen de détermination (3,4) d'une valeur de direction de la source sonore selon un repère spatial défini par le réseau de microphones (14) en utilisant comme paramètre d'entrée les signaux sinusoïdaux du temps, ladite valeur de direction ainsi déterminée etant présentée sur un support (2).

**Patentansprüche**

**1.** Verfahren zur Bestimmung einer Richtung mindestens einer Schallquelle (12) mit Hilfe eines Audiosystems, das durch ein Netzwerk aus Mikrofonen (14) den Ton aufnimmt, der von mindestens einer Schallquelle abgegeben wird, das die folgenden Schritte umfasst:

- Abgabe (4.1) durch mindestens eine Schallquelle eines Tons und Aufzeichnen der Tonsignale, die von den Mikrofonen empfangen werden,
- Ausführung (4.3, 4.5) von Kreuzkorrelationen zwischen empfangenen Signalen, um daraus die relativen Ankunftszeiten abzuleiten, wobei das Verfahren außerdem die folgenden Schritte umfasst:
- Anlegung (4.7) für jedes Mikrofon (14) eines Sinussignals der Zeit, das eine bestimmte Frequenz und eine Phasenverschiebung während relativer Ankunftszeiten aufweist,
- Bestimmungsberechnung (4.8) eines Richtungswerts der Schallquelle gemäß einem räumlichen Anhaltspunkt, der von dem Netzwerk aus Mikrofonen definiert ist, unter Verwendung der Sinussignale der Zeit als Eingangsparameter,
- Präsentation des Richtungswerts.

**2.** Verfahren zur Bestimmung einer Richtung nach Anspruch 1, wobei der Richtungswert ein Azimutdatum und ein Elevationsdatum umfasst.

**3.** Verfahren zur Bestimmung einer Richtung nach Anspruch 2, wobei der Schritt (4.8) der Bestimmungsberechnung des Azimutdatums am Eingang nur Sinussignale mit einer ersten Frequenz verwendet, und der Bestimmungsberechnung des Elevationsdatums am Eingang der Sinussignale mit einer zweiten Frequenz verwendet.

**4.** Verfahren zur Bestimmung einer Richtung nach Anspruch 3, wobei die erste Frequenz in dem Intervall zwischen 3000 Hz und 3800 Hz genommen wird, und die zweite Frequenz in dem Intervall zwischen 6000 Hz und 6800 Hz genommen wird.

5. Verfahren zur Bestimmung einer Richtung nach einem der vorstehenden Ansprüche, wobei der Ausführungsschritt von Kreuzkorrelationen zwischen den von den Mikrofonen empfangenen Signalen einen ersten Schritt (4.3) zur Kreuzkorrelation auf der gesamten Dauer der Aufzeichnung umfasst, um daraus einen Korrelationshöchstwert abzuleiten, und einen zweiten Kreuzkorrelationsschritt (4.5) um den Korrelationshöchstwert unter Verwendung überabgetasteter Daten, die ausgehend von der Aufzeichnung der Tonsignale erhalten werden.

6. Verfahren zur Bestimmung einer Richtung nach einem der vorstehenden Ansprüche, wobei der Schritt (4.8) der Bestimmungsberechnung eines Richtungswerts das Bartlettsche Verfahren umfasst.

7. Verfahren zur Bestimmung einer Richtung nach einem der vorstehenden Ansprüche, das einen polynominalen Interpolationsschritt umfasst, der nach den Kreuzkorrelationsschritten (4.3, 4.5) ausgeführt wird und darin besteht, ein Polynom zweiter Ordnung an die Daten anzuwenden, die sich aus dem Kreuzkorrelationsschritt der Tonabtastwerte, die vor und nach dem Korrelationsmaximum liegen, ergeben.

8. Verfahren zur Bestimmung einer Richtung nach einem der vorstehenden Ansprüche, das einen Bestimmungsschritt (4.9) von oben und von unten unter Verwendung eines zusätzlichen Mikrofons umfasst, das sich außerhalb der Ebene befindet, in der die anderen Mikrofone befinden.

9. Verfahren zur Bestimmung einer Richtung nach einem der vorstehenden Ansprüche, wobei der abgegebene Ton von mindestens einer Schallquelle ein weißes oder rosa Rauschen ist.

10. Verfahren zur Bestimmung einer Richtung nach einem der vorstehenden Ansprüche, das die folgenden zusätzlichen Schritte umfasst:

   - Auswahl eines Audiostandards, der die Richtung mindestens einer Schallquelle in Bezug auf den Ort, an dem sich ein Zuhörer befinden soll, definiert,
   - Gewinnung der Zielpositionen jeder Schallquelle, die dem ausgewählten Audiostandard zugeordnet sind,
   - Berechnung des Abstands zwischen den berechneten Richtungswerten und den gewonnenen Werten und Vergleich des Abstands zwischen den Werten mit einem Schwellenwert,
   - Auswahl (4.12) einer Strategie gemäß der der Wert des Abstands kleiner oder größer als der Schwellenwert ist, wobei die Strategie darauf abzielt, den Abstand zwischen der gewonnenen Richtung und der von einem Zuhörer, der an dem Ort des Netzwerks aus Mikrofonen platziert ist, empfundenen Richtung zu reduzieren.

11. Verfahren zur Bestimmung einer Richtung nach Anspruch 10, wobei der Schwellenwert zur Azimutbewertung und zur Elevationsbewertung unterschiedlich ist.

12. Verfahren zur Bestimmung einer Richtung nach einem der Ansprüche 10 und 11, das einen Anzeigeschritt eines Zielrichtungswerts mindestens einer Schallquelle mit einer Angabe umfasst, die spezifiziert, dass der Wert durch die Einführung eines Befehls eingefroren wird.

13. Verfahren zur Bestimmung einer Richtung nach einem der Ansprüche 10 und 12, das einen Anzeigeschritt einer Angabe umfasst, die für die Entsprechung zwischen den bestimmten Positionen der Schallquellen und den theoretischen Positionen, die dem ausgewählten Audiostandard zugeordnet sind, repräsentativ ist.

14. Verfahren zur Wiedergabe eines Audioinhalts, das einen Bestimmungsschritt des Formats des Audioinhalts während der Wiedergabe umfasst, wobei das Format Schallquellenpositionen definiert, und einen Änderungsschritt der Parameter, die an den Audioprozessor übertragen werden, um virtuelle Schallquellen unter Verwendung der Positionen der Schallquellen unter Verwendung des Verfahrens, das Gegenstand eines der vorstehenden Ansprüche ist, zu schaffen.

15. Verfahren zur Konfiguration eines Audiosystems, das einen Bestimmungsschritt der Positionen von Schallquellen unter Verwendung des Verfahrens, das Gegenstand eines der Ansprüche 1 bis 12 ist, und einen Vergleichsschritt sämtlicher Positionen der Schallquellen mit Positionslisten, die Standardkonfigurationen zugeordnet sind, umfasst, wobei die Standardkonfiguration, deren Positionen die nächstliegenden sind, ausgewählt und zum Konfigurieren des Audiosystems verwendet werden.

16. Audiosystem zur Bestimmung einer Richtung, das mindestens eine Schallquelle (12) und ein Netzwerk aus Mikrofonen (14), die den von dieser Schallquelle abgegebenen Ton aufnehmen, umfasst, das ein Sendemittel (11) durch

**EP 4 302 114 B1**

die mindestens eine Schallquelle eines Tons, ein Aufzeichnungsmittel (10) der von den Mikrofonen empfangenen Tonsignale, ein Ausführungsmittel (3, 4) von Kreuzkorrelationen zwischen den empfangenen Signalen zur Ableitung daraus der relativen Ankunftszeiten umfasst, wobei das System außerdem die folgenden Mittel umfasst: ein Mittel zum Erzeugen (3, 4) für jedes Mikrofon (14) eines Sinussignals der Zeit, das eine bestimmte Frequenz und eine Phasenverschiebung in Abhängigkeit von den relativen Ankunftszeiten aufweist, und ein Bestimmungsmittel (3, 4) eines Richtungswerts der Schallquelle gemäß einem räumlichen Anhaltspunkt, der von dem Netzwerk aus Mikrofonen (14) unter Verwendung als Eingangsparameter der Sinussignale der Zeit definiert wird, wobei der derart bestimmte Richtungswert auf einem Träger (2) präsentiert wird.

**Claims**

1. Method for determining a direction of at least one sound source (12) using an audio system capturing by an array of microphones (14) the sound emitted by the at least one sound source, comprising the following steps:

   - emitting (4.1) a sound by way of the at least one sound source and recording the sound signals received by the array of microphones,
   - executing (4.3, 4.5) cross-correlations between the received signals in order to deduce the relative times of arrival therefrom, the method further comprising the following steps:
   - creating (4.7) for each microphones a sinusoidal signal of time having a determined frequency and a phase offset dependent on the relative times of arrival,
   - computing (4.8) to determine a direction value of the sound source in a spatial reference frame defined by the array of microphones, using as input parameter the sinusoidal signal function of time,
   - presenting the direction value.

2. Method for determining a direction according to claim 1, in which the direction value comprises an azimuth datum and an elevation datum.

3. A Method for determining a direction according to claim 2, in which the step of computing (4.8) to determine the azimuth datum uses sinusoidal signals only of a first frequency at input, and the computation to determine the elevation datum uses sinusoidal signals of a second frequency at input.

4. A Method for determining a direction according to claim 3, in which the first frequency is in the interval between 3000 Hz and 3800 Hz, and the second frequency is in the interval between 6000 Hz and 6800 Hz.

5. A Method for determining a direction according to any one of the previous claims, in which the step of executing cross-correlations between the signals received from the microphones comprises a first step (4.3) of cross-correlation over the entire duration of the recording in order to deduce a correlation maximum value therefrom, and a second step (4.5) of cross-correlation around the correlation maximum value using oversampled data obtained from the recording of the sound signals.

6. A Method for determining a direction according to any one of the previous claims, in which the step of computing (4.8 to determine a direction value comprises Bartlett's method.

7. A Method for determining a direction according to any one of the previous claims, in which it comprises a polynomial interpolation step executed after the cross-correlation steps (4.3, 4.5) and consisting in applying a second-order polynomial to the data resulting from the step of cross-correlating applied to the samples of the sound that are located before and after the correlation maximum.

8. A Method for determining a direction according to any one of the previous claims, in which it comprises a step of determining (4.9) the top and the bottom, using an additional microphone located outside the plane in which the other microphones are located.

9. A Method for determining a direction according to any one of the previous claims, in which the sound emitted by the at least one sound source is a white or pink noise.

10. A Method for determining a direction according to any one of the previous claims, in which it comprises the following additional steps:

- selecting an audio standard that defines the direction of at least one sound source with respect to the location where a listener is supposed to be located,
- retrieving target positions of each sound source, associated with the selected audio standard,
- computing the difference between the computed direction values and the retrieved values and comparing the difference between the values with a threshold value,
- selecting (4.12) a strategy depending on whether the value of the difference is less than or greater than the threshold value, said strategy aiming to reduce the difference between the retrieved direction and the direction perceived by a listener placed at the location of the array of microphones.

11. A Method for determining a direction according to claim 10, in which the threshold value is different for the evaluation of the azimuth and for the evaluation of the elevation.

12. A Method for determining a direction according to any one of claims 10 and 11, in which it comprises a step of displaying a target direction value of at least one sound source with an indication specifying that the value is fixed by the introducing of a command.

13. A Method for determining a direction according to any one of the claims 10 and 12, in which it comprises a step of displaying an indication representative of the match between the determined positions of the sound sources and the theoretical positions associated with the selected audio standard.

14. A Method for reproducing an audio content in which it comprises a step of determining the format of the audio content currently being reproduced, said format defining positions of sound sources, and a step of modifying the parameters transmitted to the audio processor in order to create virtual sound sources using the positions of the sound sources using the method according to any one of the previous claim.

15. A Method for configuring an audio system, in which it comprises a step of determining the positions of sound sources using the method described in any one of the previous claims 1 to 12, and a step of comparing all of the positions of the sound sources with lists of positions associated with standard configurations, the standard configuration whose positions are closest then being selected and used to configure the audio system.

16. A audio system for determining a direction, comprising at least one sound source (12) and an array of microphones (14) capturing the sound emitted by this sound source, a means (11) for emitting a sound by way of the at least one sound source, a means (10) for recording the sound signals received by the microphones, a means (3, 4) for executing cross-correlations between the received signals in order to deduce relative times of arrival therefrom, the system moreover comprising the following means: a means (3, 4) for creating for each microphone a sinusoidal signal of time having a determined frequency and a phase offset dependent on the relative times of arrival, and a means (3, 4) for determining a direction value of the sound source in a spatial reference mark defined by the array of microphones (14), using as input parameter the sinusoidal signal of time, said direction value thus determined being presented on a medium (2).

**Fig. 1**

**Fig. 5**

5.1
**CONFIGURATION :**

| | |
|---|---|
| Nom du standard audio | xx20 |
| Nombre d'enceintes à détecter | 20 |
| Type de microphones | XX8 |
| Température du local | 20°C |
| Fréquence d'échantillonnage | 48 KHz |

5.2
**COMMANDE**

Lancement
Mesure
Enceinte en cours
Lancement
corrections

Num.4

5.3
**MESURES et CORRECTIONS :**

| Identif. enceinte | Azimut mesuré | Elévation mesurée | Nom enceinte | Azimut cible | Elévation cible | Correction |
|---|---|---|---|---|---|---|
| 0 | 341 | -3 | Face | | | Num. |
| 1 | 280 | +5 | AvDr | | | Déplac. |
| 2 | 198 | +1 | AvGh | | | Num. |
| 3 | 95 | +3 | ArDr | | | Num. |

DEBUT

Fig. 4

4.1 | Emission d'un signal acoustique par une source

4.2 | Enregistrement du signal émis par cette source et reçu par les microphones

4.3 | Exécution de corrélations croisées pour déterminer un maximum de corrélation entre des signaux

4.4 | Suréchantillonnage des signaux enregistrés Selon un facteur prédéterminé

4.5 | Exécution de corrélations croisées sur les signaux, Détermination d'un extrémum de corrélation

4.6 | Interpolation polynomiale sur les corrélations pour obtenir une meilleure estimation des temps d'arrivée

4.7 | Construction de 2 courbes sinusoïdale à partir des temps d'arrivée et de deux fréquences différentes

4.8 | Application de la méthode de Bartlett sur les signaux sinusoïdaux pour calculer les directions

4.9 | Détermination de la direction haut/bas

4.10 | Non ◀ Autre source à mesurer ? ▶ Oui

4.11 | Comparaison des valeurs de directions calculées avec des valeurs cibles

4.12 | Sélection d'une stratégie de correction en fonction des écarts et lancement de la stratégie

**Fig. 2**

9

Réseau

Amplificateur 1

2

8

Interface réseau

7

Interface vidéo

Ecran

11

Interface
Haut-parleur

12

4

Mémoire
Programme

3

Unité
Centrale

10

Mémoire de
données

12

13

Interface
Microphones

5

Interface
Utilisateur

12

6

Télécommande
Ou Clavier

14

**Fig. 3**

P

y

x

14

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3081641

**Littérature non-brevet citée dans la description**

- **YOUSSEF KHMO** ; **SAÏD SAFI** ; **MILOUD FRIKEL**. *Comparative Study between Several Directions of Arrival, Estimation Method*